# EUROPEAN PATENT APPLICATION

(11) **EP 3 562 049 A1**
(43) Date of publication of application: **30.10.2019**
(21) Application number: 17883099.8
(22) Date of filing: 15.12.2017
(51) Int. Cl.: H04B 7/0408, H04B 7/06, H04B 7/08

(54) **BEAM MANAGEMENT INFORMATION CONFIGURATION AND PROCESSING METHOD, TERMINAL AND BASE STATION**

(30) Priority: 23.12.2016 CN 201611206090
(71) Applicant: Vivo Mobile Communication Co., Ltd., Dongguan, Guangdong 523860 (CN)
(72) Inventor: SUN, Xiaodong, Dongguan Guangdong 523860 (CN)
(74) Representative: Winter, Brandl, Fürniss, Hübner, Röss, Kaiser, Polte - Partnerschaft mbB
(86) International application number: PCT/CN2017/116433
(87) International publication number: WO 2018/113593

(57) **Abstract**

Provided are a beam management information configuration and processing method, a terminal and a base station. The configuration method comprises: configuring beam management information in a beam management procedure, wherein the beam management information comprises: a beam report configuration parameter in a downlink beam management procedure or a reception/transmission beam information in an uplink beam management procedure, and the beam report configuration parameter is used for indicating the terminal to report a beam satisfying a preconfigured condition in the downlink beam management procedure; and transmitting the beam management information to the terminal, enabling the terminal to report beam information in the downlink beam management procedure or transmit an uplink beam in the uplink beam management procedure.

## Description

### CROSS-REFERENCE TO RELATED APPLICATION

The present application claims a priority of the Chinese patent application No. 201611206090.5 filed in China on December 23, 2016, which is incorporated herein by reference in its entirety.

### TECHNICAL FIELD

The disclosure relates to the field of telecommunication, and in particular, to a beam management information configuration method, a beam management information processing method, a terminal and a base station.

### BACKGROUND

In the future, a high-frequency communication and Massive Multiple-Input Multiple-Output (MIMO) technologies will be introduced in the 5th Generation (5G) mobile communication system, to achieve the goals of a downlink transmission rate of 20Gbps and an uplink transmission rate of 10Gbps. The high-frequency communication may provide a broader system bandwidth and a smaller antenna dimension, facilitating the deployment of Massive MIMO in the base station and the User Equipment (UE). While the high-frequency communication suffers from a large path loss, a poor resistance to interference and a vulnerable link, the Massive MIMO offers relative large antenna gain. As a result, combining the high-frequency communication with the Massive MIMO becomes an inexorable trend for the future 5G mobile communication system. However, the Massive MIMO cannot solve all the problems of the high-frequency communication, such as the vulnerability of link. The robustness of the high-frequency communication link may be effectively improved by a fast, efficient and reasonable beam management on beams of the high-frequency communication. The reporting of the beam-management-related configuration information and the beam group or beam appear of particular importance.

A reasonable beam measurement and reporting may effectively reduce control channel overhead and improve the utilization of system spectrum. Although the uplink and downlink beam management procedure in the high-frequency communication has been proposed by the related art, there is still a need for a method of beam measurement and reporting.

### SUMMARY

The embodiments of the present disclosure provide a beam management information configuration method, a beam management information processing method, a terminal and a base station, to provide a solution of beam reporting which has not been found in the related art.

In a first aspect, an embodiment of the present disclosure provides a beam management information configuration method, applied to a base station and including: configuring a beam management information in a beam management procedure, wherein the beam management information includes: a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and transmitting the beam management information to the terminal.

In a second aspect, another embodiment of the present disclosure provides a beam management information processing method, applied to a terminal and including: receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information.

In a third aspect, another embodiment of the present disclosure provides a base station, including: a configuration module, configured to configure a beam management information in a beam management procedure, wherein the beam management information includes: a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and a transmission module, configured to transmit the beam management information to the terminal.

In a fourth aspect, another embodiment of the present disclosure provides a terminal, including: a second obtaining module, configured to receive a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and a processing module, configured to report a beam or transmitting a beam based on the beam management information.

In a fifth aspect, an embodiment of the present disclosure provides a base station, including: a memory, a processor, and a computer program stored in the memory and configured to be executed by the processor, wherein the processor is configured to execute the computer program, to implement steps of the beam management information configuration method as disclosed in the first aspect.

In a sixth aspect, an embodiment of the present disclosure provides a terminal, including a memory, a processor, and a computer program stored in the memory and configured to be executed by the processor, wherein the processor is configured to execute the computer program, to implement steps of the downlink control channel indication method as disclosed in the second aspect.

In a seventh aspect, an embodiment of the present disclosure provides a computer-readable storage medium storing therein a computer program, wherein the computer program is configured to be executed by a processor, to implement steps of the beam management information configuration method as disclosed in the first aspect.

In an eighth aspect, an embodiment of the present disclosure provides a computer-readable storage medium storing therein a computer program, wherein the computer program is configured to be executed by a processor, to implement steps of the downlink control channel indication method as disclosed in the second aspect.

In this way, the technical solutions of the embodiments include configuring the beam management information in the beam management procedure, wherein the beam management information includes: the beam report configuration parameter in the downlink beam management procedure or reception/transmission beam information in the uplink beam management procedure, and the beam report configuration parameter is used to indicate the terminal to report the beam satisfying a preconfigured condition in the downlink beam management procedure; and transmitting the beam management information to the terminal, enabling the terminal to report the beam information in the downlink beam management procedure or transmit an uplink beam in the uplink beam management procedure, thereby reducing the overheads for the base station downlink control information and the terminal reporting information in the beam management of the future mobile communication system, effectively improving the spectrum utilization rate and enhancing the system transmission rate.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
FIG. 1 is a flow chart of the beam management information configuration method according to some embodiments of the present disclosure;
FIG. 2 is a flow chart of the beam management information configuration method according to some embodiments of the present disclosure;
FIG. 3 is a flow chart of the beam management information configuration method according to some embodiments of the present disclosure;
FIG. 4 is a schematic diagram of the first downlink beam management of the beam management information configuration method according to some embodiments of the present disclosure;
FIG. 5 is a flow chart of the beam management information configuration method according to some embodiments of the present disclosure;
FIG. 6 is a schematic diagram of the second downlink beam management of the beam management information configuration method according to some embodiments of the present disclosure;
FIG. 7 is a flow chart of the beam management information configuration method according to some embodiments of the present disclosure;
FIG. 8 is a flow chart of the beam management information configuration method according to some embodiments of the present disclosure;
FIG. 9 is a schematic diagram of the uplink beam management of the beam management information configuration method according to some embodiments of the present disclosure;
FIG. 10 is a flow chart of the beam management information processing method according to some embodiments of the present disclosure;
FIG. 11 is a flow chart of the beam management information processing method according to some embodiments of the present disclosure;
FIG. 12 is a schematic structural diagram of the base station according to some embodiments of the present disclosure;
FIG. 13 is a schematic structural diagram of the base station according to some embodiments of the present disclosure;
FIG. 14 is a schematic structural diagram of the base station according to some embodiments of the present disclosure;
FIG. 15 is a schematic structural diagram of the terminal according to some embodiments of the present disclosure;
FIG. 16 is a schematic structural diagram of the terminal according to some embodiments of the present disclosure;
FIG. 17 is a schematic structural diagram of the terminal according to some embodiments of the present disclosure;
FIG. 18 is a schematic structural diagram of the terminal according to some embodiments of the present disclosure.

### DETAILED DESCRIPTION OF THE EMBODIMENTS

In the following, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

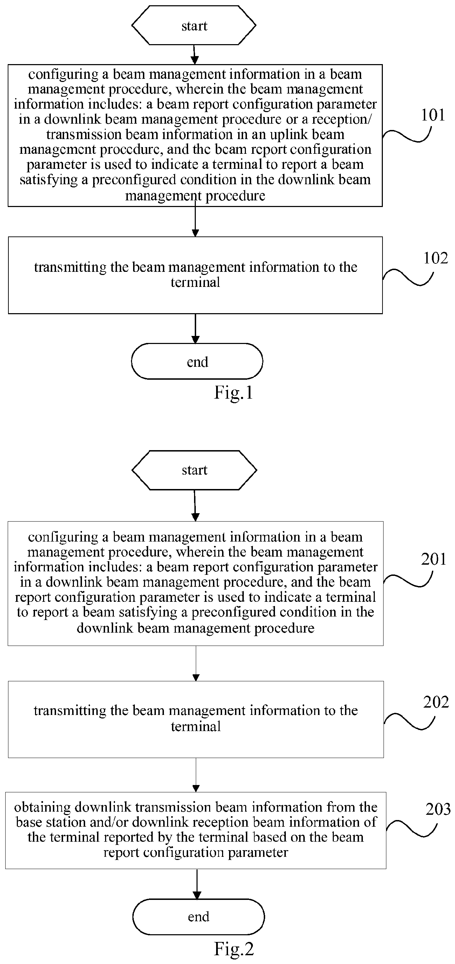

In some optional embodiments, as shown in FIG. 1, the present disclosure provides a beam management information configuration method, which is applicable to a base station and includes the following steps.

Step 101: configuring a beam management information in a beam management procedure, wherein the beam management information includes: a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure.

In the downlink beam management procedure, the base station configures the beam report configuration parameter for the terminal in order for the terminal to report the beam information. The beam report configuration parameter instructs the terminal to report a beam satisfying a preconfigured condition in the downlink beam management procedure, thus achieving the objective of controlling the terminal to report the corresponding beam information in the downlink beam management procedure. The preconfigured condition may include: a quantity of reported beams is less than or equal to a quantity of pre-set beams; a received power of the reported beam is larger than a pre-set power threshold; a received signal strength of the reported beam is larger than a pre-set signal strength; and an offset between the reported beams in any two downlink beam management procedures is less than a pre-set beam offset; among others.

Further, the aforementioned beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

Here, the beam report configuration parameters configured in the downlink beam management procedures may be the same or different from each other. By configuring the beam report configuration parameters containing the aforementioned information, the terminal may be controlled to report the information on the beam satisfying the corresponding condition in the downlink beam management procedure.

In the uplink beam management procedure, the base station configures the reception/transmission beam information for the terminal such that the terminal may transmit an uplink beam. The reception/transmission beam information includes specifically: transmission beam information of the terminal and/or reception beam information of the base station in the uplink beam management procedure.

The reception/transmission beam information configured in the uplink beam management procedures may be the same or different from each other. The reception/transmission beam information may include specifically at least one of: an uplink transmission beam information of the terminal in the uplink beam management procedure, including specifically: a resource indication, beam resource group, antenna port identifier or antenna port group for an uplink transmission beam of the terminal, which specify a UE uplink transmission beam, beam group, antenna port or antenna port group respectively; an offset between the uplink transmission beam information of the terminal in any two uplink beam management procedures, including specifically: the offset between the resource indications, beam resource groups, antenna port identifiers or antenna port groups of the uplink transmission beams of the terminal in any two uplink beam management procedures; and an uplink reception beam information of the base station in the uplink beam management procedure, including specifically: a resource indication, beam resource group, antenna port identifier or antenna port group for an uplink reception beam of the base station in the uplink beam management procedure.

It is noted that, the terminal may indicate in the uplink beam management procedure the uplink reception beam information of the base station, which including the resource indication, beam resource group, antenna port identifier or antenna port group for the uplink reception beam, via the uplink control channel or uplink traffic channel, so as to specify the resource, beam resource group, antenna port or antenna port group for the uplink reception beam of the base station.

Here, the reporting of the uplink reception beam information may be applied to the scenario where a mismatch between the uplink transmission beam of the terminal and the uplink reception beam from the base station occurs.

Moreover, the reporting of the beam group in the uplink beam management procedure may be applied in the fast beam switch and transmission mode selection.

Step 102: transmitting the beam management information to the terminal.

In specific, transmitting the beam management information to the terminal through Radio Resource Control (RRC) signaling, Medium Access Control (MAC) layer Control Element (CE) and/or Physical layer Downlink Control Indicator (DCI), in order for the terminal to report the beam information or transmit the uplink beam.

The beam management information configuration method according to the embodiments of the present disclosure includes: configuring the beam management information in the beam management procedure, wherein the beam management information includes: the beam report configuration parameter in the downlink beam management procedure or reception/transmission beam information in the uplink beam management procedure, and the beam report configuration parameter is used to indicate the terminal to report the beam satisfying a preconfigured condition in the downlink beam management procedure; and transmitting the beam management information to the terminal, enabling the terminal to report the beam information in the downlink beam management procedure or transmit an uplink beam in the uplink beam management procedure, thereby reducing the overheads for the base station downlink control information and the terminal reporting information in the beam management of the future mobile communication system, effectively improving the spectrum utilization rate and enhancing the system transmission rate.

In some optional embodiments, as shown in FIG. 2, the present disclosure provides a beam management information configuration method, which is applicable to a base station and includes the following steps.

Step 201: configuring a beam management information in a beam management procedure, wherein the beam management information includes: a beam report configuration parameter in a downlink beam management procedure, and the beam report configuration parameter is used to indicate a terminal to report a beam satisfying a preconfigured condition in the downlink beam management procedure.

Here, the base station configures the beam report configuration parameter for the terminal in the downlink beam management procedure in order for the terminal to report the beam information.

Step 202: transmitting the beam management information to the terminal.

This step is the same as the aforementioned step 102 and the detailed description thereof is not repeated here.

Step 203: obtaining downlink transmission beam information from the base station and/or downlink reception beam information of the terminal reported by the terminal based on the beam report configuration parameter.

The aforementioned downlink transmission beam information from the base station includes at least one of: a resource indication information of a downlink transmission beam from the base station, a resource group information of the downlink transmission beam from the base station, an antenna port identifier of the downlink transmission beam from the base station or an antenna port group information of the downlink transmission beam from the base station; and the downlink reception beam information of the terminal includes at least one of: a resource indication information of a downlink reception beam of the terminal, a resource group information of the downlink reception beam of the terminal, an antenna port identifier of the downlink reception beam of the terminal or an antenna port group information of the downlink reception beam of the terminal.

It is noted that the reporting of the downlink reception beam information of the terminal may be applied to the scenario where a mismatch between the base station transmitting beam and the terminal receiving beam occurs.

Moreover, the reporting of the beam group in the downlink beam management procedure may be applied in the fast beam switch and transmission mode selection.

Here, the terminal reports the downlink transmission beam information from the base station and/or downlink reception beam information of the terminal based on the beam report configuration parameter, thereby achieving the objective of reporting a beam in the beam management procedure by the terminal.

The beam management information configuration method according to the embodiments of the present disclosure includes: configuring the beam management information in the beam management procedure, wherein the beam management information includes: the beam report configuration parameter in the downlink beam management procedure, and the beam report configuration parameter is used to indicate the terminal to report the beam satisfying a preconfigured condition in the downlink beam management procedure; transmitting the beam management information to the terminal; and obtaining downlink transmission beam information from the base station and/or downlink reception beam information of the terminal reported by the terminal based on the beam report configuration parameter, thereby achieving the objective of reporting a beam in the beam management procedure by the terminal.

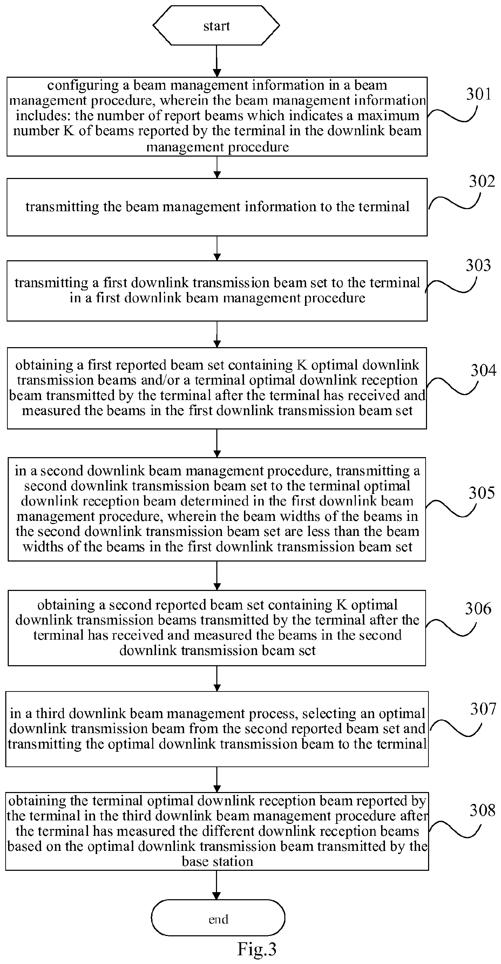

In some optional embodiments, assuming the aforementioned beam report configuration parameter is the number of report beams, the beam management information configuration method according to the embodiment of the present disclosure, as shown in FIG. 3, includes the following steps.

Step 301: configuring a beam management information in a beam management procedure, wherein the beam management information includes: the number of report beams which indicates a maximum number K of beams reported by the terminal in the downlink beam management procedure.

The base station configures the number of report beams in the beam management information, to control the quantity of beams reported by the terminal. In this case, it is relatively easy to configure since the to-be-configured information in the downlink beam management information is merely the number of report beams.

Step 302: transmitting the beam management information to the terminal.

In specific, transmitting the beam management information to the terminal through a RRC signaling, a MAC layer CE and/or a physical layer DCI, in order for the terminal to report the beam information.

Step 303: transmitting a first downlink transmission beam set to the terminal in a first downlink beam management procedure.

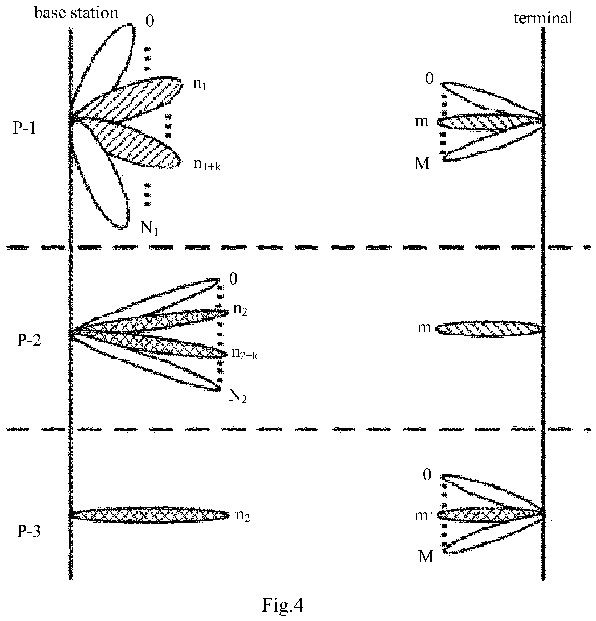

Assuming, in a downlink beam management procedure, a maximum transmission beam quantity of a Transmission and Reception Point (TRP) in the base station is N, a maximum reception beam quantity of a UE is M, and the number of report beams configured for the UE at the network side is K, as shown in FIG. 4, the TRP employs a wide beam to transmit in the first downlink beam management procedure P-1, wherein the resources for the transmission beams are labeled as 0, 1, ..., N₁ (N₁≤N), and the resources for the reception beams are labeled as 0, 1, ..., M. The TRP transmits the first downlink transmission beam set to the terminal, such that the terminal determines an optimal downlink transmission beam and an optimal downlink reception beam on the basis of the beams in the first downlink transmission beam set.

Step 304: obtaining a first reported beam set containing K optimal downlink transmission beams and/or a terminal optimal downlink reception beam transmitted by the terminal after the terminal has received and measured the beams in the first downlink transmission beam set.

As shown in FIG. 4, the terminal receives the beams in the first downlink transmission beam set by using different downlink reception beams, selects K downlink transmission beams, e.g. n₁, ..., n₁₊ₖ, as optimal transmission beams and determines the terminal optimal downlink reception beam m. The terminal may report the first reported beam set containing the K optimal downlink transmission beams and/or the terminal optimal downlink reception beam to the TRP of the base station.

Step 305: in a second downlink beam management procedure, transmitting a second downlink transmission beam set to the terminal optimal downlink reception beam determined in the first downlink beam management procedure, wherein the beam widths of the beams in the second downlink transmission beam set are less than the beam widths of the beams in the first downlink transmission beam set.

As shown in FIG. 4, in the second downlink beam management procedure, the UE reception beam is set to m, and the TRP transmits the second downlink transmission beam set by using relatively narrow beams, the resources for the transmission beams being labeled as 0, 1, ..., N₂ (N₂≤N), such that the terminal measures the beams in the second downlink transmission beam set.

Step 306: obtaining a second reported beam set containing K optimal downlink transmission beams transmitted by the terminal after the terminal has received and measured the beams in the second downlink transmission beam set.

In the second downlink beam management procedure P-2, the terminal measures the downlink transmission beams transmitted by different TRPs by using the optimal downlink reception beam m, selects K downlink transmission beams, e.g. n₂, ..., n₂₊ₖ, from the second downlink transmission beam set and reports the K downlink transmission beams to the base station.

Step 307: in a third downlink beam management procedure, selecting an optimal downlink transmission beam from the second reported beam set and transmitting the optimal downlink transmission beam to the terminal.

In the third downlink beam management procedure, selecting any beam from the second reported beam set as the transmission beam such that the terminal makes measurements on different downlink reception beams.

Step 308: obtaining the terminal optimal downlink reception beam reported by the terminal in the third downlink beam management procedure after the terminal has measured the different downlink reception beams based on the optimal downlink transmission beam transmitted by the base station.

In the third downlink beam management procedure P-3, the beam transmitted by the TRP is set to n₂, UE measures different reception beams and determines the UE optimal reception beam as m' and/or the UE reports the optimal reception beam m'.

Through the aforementioned downlink beam management procedures P-1, P-2 and P-3, it is determined that the optimal transmission beam for the TRP is n₂, and the optimal reception beam for the UE is m' in the case of the downlink transmission.

Due to the fact that only the number of report beams requires configuration in the downlink beam management procedure, the beam management information configuration method according to the embodiment of the present disclosure is simple and easy to implement.

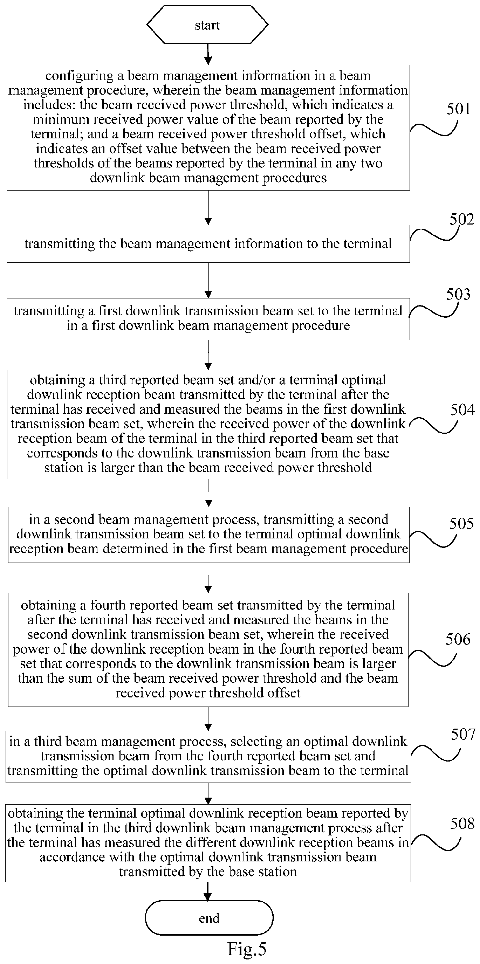

In some optional embodiments, assuming the aforementioned beam report configuration parameter is the beam received power threshold and the beam received power threshold offset, as shown in FIG. 5, the beam management information configuration method according to the embodiment of the present disclosure includes the following steps.

Step 501: configuring a beam management information in a beam management procedure, wherein the beam management information includes: the beam received power threshold, which indicates a minimum received power value of the beam reported by the terminal; and a beam received power threshold offset, which indicates an offset value between the beam received power thresholds of the beams reported by the terminal in any two downlink beam management procedures.

Here, the base station configures the downlink beam management beam received power threshold and the offset between the beam received power thresholds of P-1 and P-2, to instruct the terminal to report the downlink transmission beam with a received power larger than the beam received power threshold, and specify the offset between the beam received power thresholds of P-1 and P-2.

Step 502: transmitting the beam management information to the terminal.

In specific, transmitting the beam management information to the terminal through a RRC signaling, a MAC layer CE and/or a physical layer DCI, in order for the terminal to report the beam information.

Step 503: transmitting a first downlink transmission beam set to the terminal in a first downlink beam management procedure.

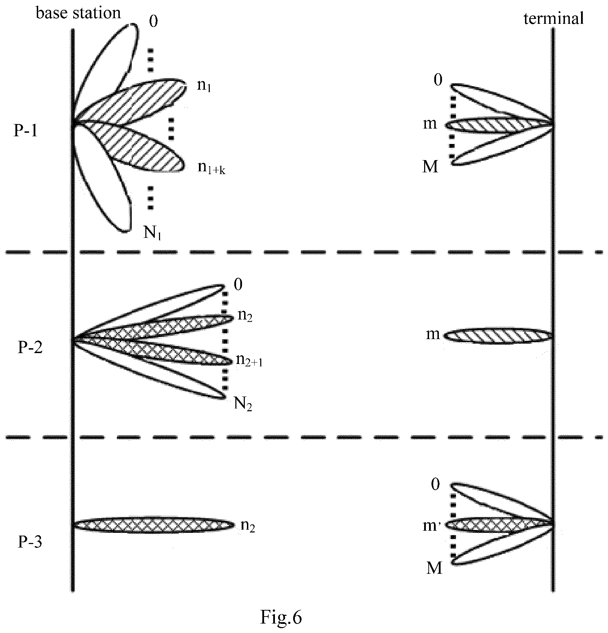

Assuming, in a downlink beam management procedure, a maximum transmission beam quantity of a Transmission and Reception Point (TRP) in the base station is N, a maximum reception beam quantity of a UE is M, the downlink beam management beam received power threshold configured at the network side is BeamRxPowerTh, and the offset between the beam received power thresholds of the first and second downlink beam management procedures is BeamRxPowerThOffset, as shown in FIG. 6, wherein in the first downlink beam management procedure P-1, the resources for the TRP transmission beams are labeled as 0, 1, ..., N₁ (N₁≤N) and the resources for the reception beams are labeled as 0, 1, ..., M. The TRP transmits the first downlink transmission beam set to the terminal, such that the terminal determines an optimal downlink transmission beam and an optimal downlink reception beam on the basis of the beams in the first downlink transmission beam set.

Step 504: obtaining a third reported beam set and/or a terminal optimal downlink reception beam transmitted by the terminal after the terminal has received and measured the beams in the first downlink transmission beam set, wherein the received power of the downlink reception beam of the terminal in the third reported beam set that corresponds to the downlink transmission beam from the base station is larger than the beam received power threshold.

As shown in FIG. 6, the terminal uses different downlink reception beams to receive the beams in the first downlink transmission beam set, selects the downlink reception beams of the terminal which have a received power larger than the threshold BeamRxPowerTh, and determines the TRP optimal transmission beams n₁, ..., n₁₊ₖ corresponding to the selected terminal downlink reception beams and also determines the terminal optimal downlink reception beam m. The terminal reports the determined TRP optimal transmission beams n₁, ···, n₁₊ₖ and/or terminal optimal downlink reception beam m to the TRP of the base station.

Step 505: in a second beam management procedure, transmitting a second downlink transmission beam set to the terminal optimal downlink reception beam determined in the first beam management procedure.

As shown in FIG. 6, in the second downlink beam management procedure, the UE reception beam is set to m, and the resources for the transmission beams are labeled as 0, 1, ..., N₂ (N₂≤N), such that the terminal measures the beams in the second downlink transmission beam set.

Step 506: obtaining a fourth reported beam set transmitted by the terminal after the terminal has received and measured the beams in the second downlink transmission beam set, wherein the received power of the downlink reception beam in the fourth reported beam set that corresponds to the downlink transmission beam is larger than the sum of the beam received power threshold and the beam received power threshold offset.

In the second downlink beam management procedure P-2, the terminal measures the downlink transmission beams transmitted by different TRPs by using the optimal downlink reception beam m, selects the downlink reception beams of the terminal which have a received power larger than the sum of the BeamRxPowerTh and the BeamRxPowerThOffset, determines the TRP downlink transmission beams, e.g. n₂, ..., n₂₊₁, which correspond to the selected terminal downlink reception beams and reports the TRP downlink transmission beams to the base station.

Step 507: in a third beam management procedure, selecting an optimal downlink transmission beam from the fourth reported beam set and transmitting the optimal downlink transmission beam to the terminal.

In the third downlink beam management procedure, selecting any beam from the fourth reported beam set as the transmission beam such that the terminal makes measurements on different downlink reception beams.

Step 508: obtaining the terminal optimal downlink reception beam reported by the terminal in the third downlink beam management procedure after the terminal has measured the different downlink reception beams based on the optimal downlink transmission beam transmitted by the base station.

In the third downlink beam management procedure P-3, the beam transmitted by the TRP is set to n₂, UE measures different reception beams and determines the UE optimal reception beam as m' and/or the UE reports the optimal reception beam m'.

Through the aforementioned downlink beam management procedures P-1, P-2 and P-3, it is determined that the optimal transmission beam for the TRP is n₂, and the optimal reception beam for the UE is m' in the case of the downlink transmission.

The beam management information configuration method according to the embodiment of the present disclosure achieves the beam information reporting in the downlink beam management procedure by configuring the beam received power threshold and the beam received power threshold offset.

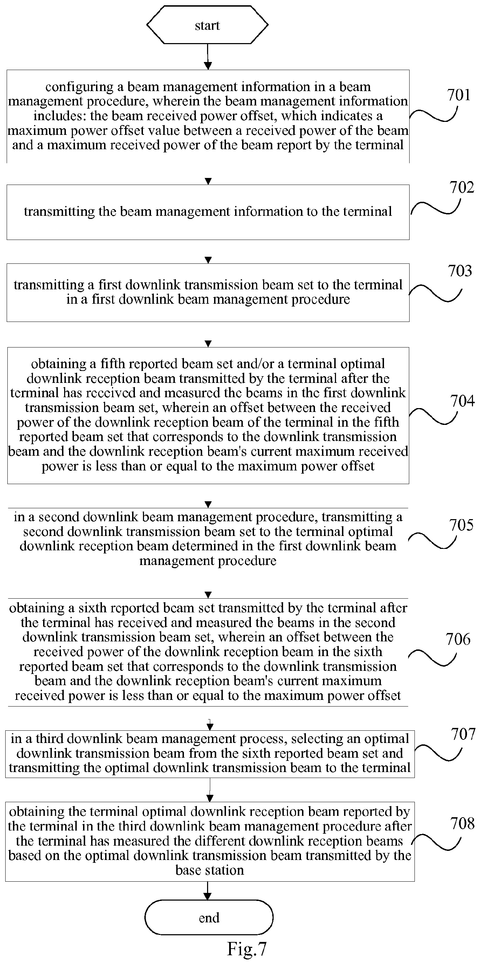

In some optional embodiments, assuming the aforementioned beam report configuration parameter is the beam received power offset, as shown in FIG. 7, the beam management information configuration method according to the embodiment of the present disclosure includes the following steps.

Step 701: configuring a beam management information in a beam management procedure, wherein the beam management information includes: the beam received power offset, which indicates a maximum power offset value between a received power of the beam and a maximum received power of the beam report by the terminal.

Here, the base station configures the beam received power offset, to instruct the terminal to report the beam which has an offset between the received power thereof and a maximum beam received power less than or equal to said maximum power offset.

Step 702: transmitting the beam management information to the terminal.

In specific, transmitting the beam management information to the terminal through a RRC signaling, a MAC layer CE and/or a physical layer DCI, in order for the terminal to report the beam information.

Step 703: transmitting a first downlink transmission beam set to the terminal in a first downlink beam management procedure.

Assuming, in a downlink beam management procedure, a maximum transmission beam quantity of a Transmission and Reception Point (TRP) in the base station is N, a maximum reception beam quantity of a UE is M, and the beam received power offset configured at the network side is BeamRxPowerOffset, as shown in FIG. 6, wherein in the first downlink beam management procedure P-1, the resources for the TRP transmission beams are labeled as 0, 1, ..., N₁ (N₁≤N) and the resources for the reception beams are labeled as 0, 1, ..., M. The TRP transmits the first downlink transmission beam set to the terminal, such that the terminal determines an optimal downlink transmission beam and an optimal downlink reception beam on the basis of the beams in the first downlink transmission beam set.

Step 704: obtaining a fifth reported beam set and/or a terminal optimal downlink reception beam transmitted by the terminal after the terminal has received and measured the beams in the first downlink transmission beam set, wherein an offset between the received power of the downlink reception beam of the terminal in the fifth reported beam set that corresponds to the downlink transmission beam and the downlink reception beam's current maximum received power is less than or equal to the maximum power offset.

Assuming the current UE maximum beam received power is Pn1, the terminal uses different downlink reception beams to receive the beams in the first downlink transmission beam set, selects the downlink reception beams of the terminal which have a beam received power falling in the range of [Pn1 - BeamRxPowerOffset, Pni], and determines the TRP optimal transmission beams n₁, ···, n₁₊ₖ corresponding to the selected terminal downlink reception beams and also determines the terminal optimal downlink reception beam m. The terminal reports the determined TRP optimal transmission beams n₁,..., n₁₊ₖ and/or terminal optimal downlink reception beam m to the TRP of the base station.

Step 705: in a second downlink beam management procedure, transmitting a second downlink transmission beam set to the terminal optimal downlink reception beam determined in the first downlink beam management procedure.

As shown in FIG. 6, in the second downlink beam management procedure, the UE reception beam is set to m, and the resources for the transmission beams are labeled as 0, 1, ..., N₂ (N₂≤N), such that the terminal measures the beams in the second downlink transmission beam set.

Step 706: obtaining a sixth reported beam set transmitted by the terminal after the terminal has received and measured the beams in the second downlink transmission beam set, wherein an offset between the received power of the downlink reception beam in the sixth reported beam set that corresponds to the downlink transmission beam and the downlink reception beam's current maximum received power is less than or equal to the maximum power offset.

Assuming the current UE maximum beam received power is Pₙ₂, in the second downlink beam management procedure P-2, the terminal uses the optimal downlink reception beams m to measure the downlink transmission beams transmitted by different TRPs, selects the downlink reception beams of the terminal which have a received power falling in the range of [Pn2 - BeamRxPowerOffset, Pn2], determines the TRP downlink transmission beams such as n₂, ···, n₂₊₁ corresponding to the selected terminal downlink reception beams, and reports the determined TRP downlink transmission beams to the base station.

Step 707: in a third downlink beam management procedure, selecting an optimal downlink transmission beam from the sixth reported beam set and transmitting the optimal downlink transmission beam to the terminal.

In the third downlink beam management procedure, selecting any beam from the sixth reported beam set as the transmission beam such that the terminal makes measurements on different downlink reception beams.

Step 708: obtaining the terminal optimal downlink reception beam reported by the terminal in the third downlink beam management procedure after the terminal has measured the different downlink reception beams based on the optimal downlink transmission beam transmitted by the base station.

In the third downlink beam management procedure P-3, the beam transmitted by the TRP is set to n2, UE measures different reception beams and determines the UE optimal reception beam as m' and/or the UE reports the optimal reception beam m'.

Through the aforementioned downlink beam management procedures P-1, P-2 and P-3, it is determined that the optimal transmission beam for the TRP is n2, and the optimal reception beam for the UE is m' in the cased of the downlink transmission.

The beam management information configuration method according to the embodiment of the present disclosure achieves the beam information reporting in the downlink beam management procedure by configuring the beam received power offset, leading to a more accurate number of report beams.

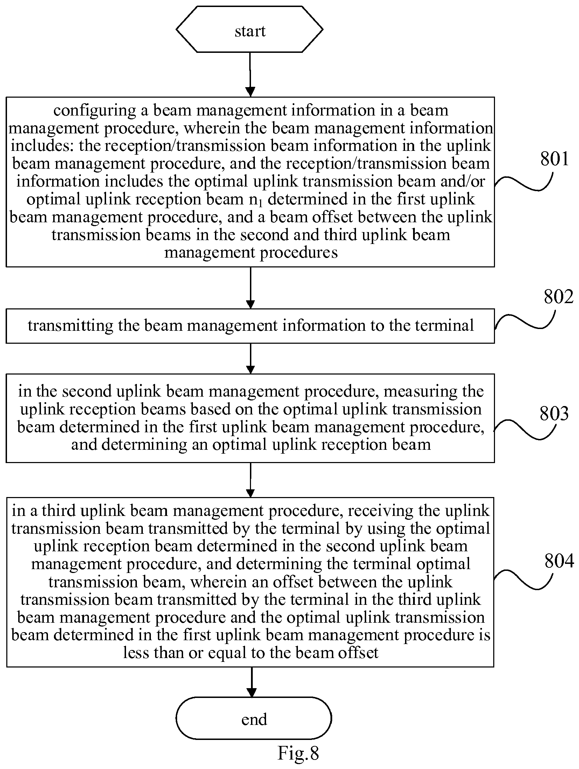

In some optional embodiments, assuming the aforementioned beam management information is the reception/transmission beam information in the uplink beam management procedure, wherein the reception/transmission beam information includes an optimal uplink transmission beam and/or optimal uplink reception beam n₁ determined in the first uplink beam management procedure, and a beam offset between the uplink transmission beams in the second and third uplink beam management procedures, as shown in FIG. 8, the beam management information configuration method according to the embodiment of the present disclosure includes the following steps.

Step 801: configuring a beam management information in a beam management procedure, wherein the beam management information includes: the reception/transmission beam information in the uplink beam management procedure, and the reception/transmission beam information includes the optimal uplink transmission beam and/or optimal uplink reception beam n₁ determined in the first uplink beam management procedure, and a beam offset between the uplink transmission beams in the second and third uplink beam management procedures.

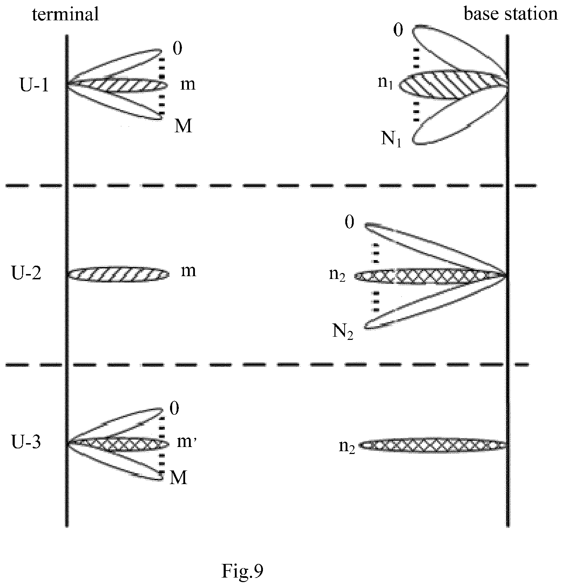

Assuming, in an uplink beam management procedure, a maximum transmission beam quantity of a UE is M, a maximum reception beam quantity of a TRP is N, the uplink beam management procedure is as shown in FIG. 9. In the first uplink beam management procedure U-1, the resources for the UE transmission beams are labeled as 0, 1, ..., M, the resources for the TRP reception beams are labeled as 0, 1, ..., N₁ (N₁≤N), the UE optimal transmission beam is m and the TRP optimal reception beam is n₁. During configuring the beam management information, the base station configures in the reception/transmission beam information the information transmitted by the terminal using the optimal transmission beam m in a second uplink beam management procedure U-2, and the beam offset between the uplink transmission beams in the second and third uplink beam management procedures, to control the beam transmission of the terminal in subsequent beam management procedures.

Step 802: transmitting the beam management information to the terminal.

In specific, transmitting the beam management information to the terminal through a RRC signaling, a MAC layer CE and/or a physical layer DCI, in order for the terminal to report the beam information.

Step 803: in the second uplink beam management procedure, measuring the uplink reception beams based on the optimal uplink transmission beam determined in the first uplink beam management procedure, and determining an optimal uplink reception beam.

In the second uplink beam management procedure U-2, the UE is configured at the network side to transmit using beam m, and/or the TRP optimal reception beam is n₁, the resources for the TRP reception beams are labeled as 0, 1, ···, N₂ (N₂≤N). The TRP makes measurements by using different reception beams to determine the TRP optimal reception beam is n₂.

In addition, the UE may indicate through an uplink control channel or uplink traffic channel to the TRP to make measurements using beams adjacent to n₁ and determine the TRP optimal reception beam is n₂. In this case, the step 803 may include specifically: in the second uplink beam management procedure, measuring the uplink reception beams adjacent to the optimal uplink reception beam n₁ based on the optimal uplink transmission beam determined in the first uplink beam management procedure, and determining an optimal uplink reception beam, wherein the uplink reception beams adjacent to the optimal uplink reception beam n₁ are the beams having an offset from the optimal uplink reception beam n₁ that is less than a preset offset.

Step 804: in a third uplink beam management procedure, receiving the uplink transmission beam transmitted by the terminal by using the optimal uplink reception beam determined in the second uplink beam management procedure, and determining the terminal optimal transmission beam, wherein an offset between the uplink transmission beam transmitted by the terminal in the third uplink beam management procedure and the optimal uplink transmission beam determined in the first uplink beam management procedure is less than or equal to the beam offset.

In the third uplink beam management procedure U-3, the offset between the beams in U-2 and U-3 is configured at the network side as k, the UE transmits by using beams falling in the range of [m-k, m+k] and the TRP reception beam is set to n2. The TRP measures different reception beams to determine the UE optimal transmission beam m'.

Through the aforementioned uplink beam management procedures U-1, U-2 and U-3, it may determine that the UE optimal transmission beam is m' and the TRP optimal reception beam is n₂ in the case of the uplink transmission.

The beam management information configuration method according to the embodiment of the present disclosure may reduce the control signaling overhead and improve the efficiency of uplink beam management.

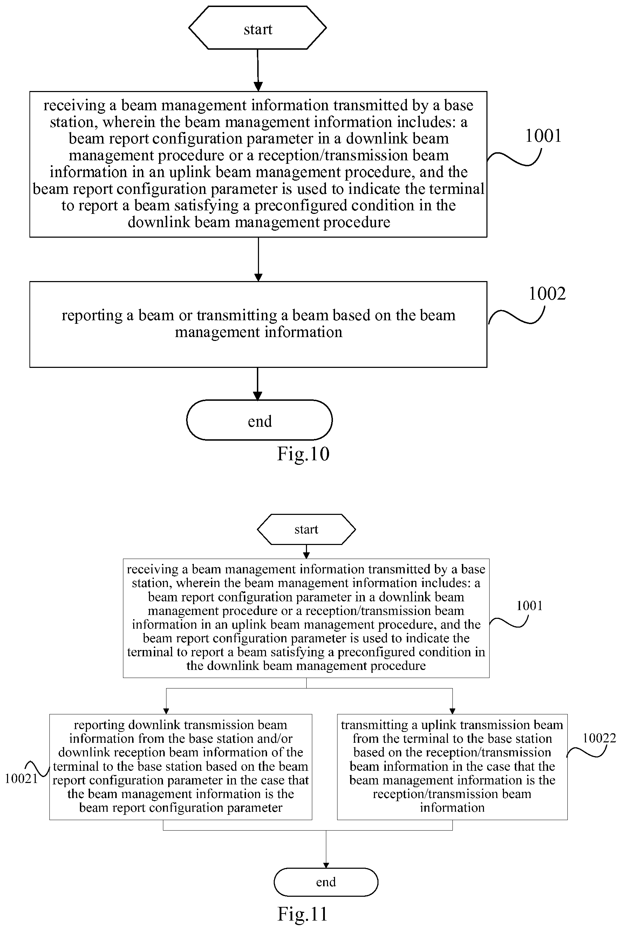

In some optional embodiments, as shown in FIG. 10, the embodiment of the present disclosure also provides a beam management information processing method, which is applicable to a terminal and includes the following steps.

Step 1001: receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure.

In the downlink beam management procedure, the base station configures the beam report configuration parameter for the terminal in order for the terminal to report the beam information. The beam report configuration parameter instructs the terminal to report a beam satisfying a preconfigured condition in the downlink beam management procedure, thus achieving the objective of controlling the terminal to report the corresponding beam information in the downlink beam management procedure. The preconfigured condition may include specifically: a quantity of reported beams is less than or equal to a quantity of pre-set beams; a received power of the reported beam is larger than a pre-set power threshold; a received signal strength of the reported beam is larger than a pre-set signal strength; and an offset between the reported beams in any two downlink beam management procedures is less than a pre-set beam offset; among others.

Further, the aforementioned beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

Here, the beam report configuration parameters configured in the downlink beam management procedures may be the same or different from each other. By configuring the beam report configuration parameters containing the aforementioned information, the terminal may be controlled to report the information on the beam satisfying the corresponding condition in the downlink beam management procedure.

In the uplink beam management procedure, the base station configures the reception/transmission beam information for the terminal such that the terminal may transmit an uplink beam. The reception/transmission beam information includes specifically: transmission beam information of the terminal and/or reception beam information of the base station in the uplink beam management procedure.

The reception/transmission beam information configured in the uplink beam management procedures may be the same or different from each other. The reception/transmission beam information may include specifically at least one of: an uplink transmission beam information of the terminal in the uplink beam management procedure, including specifically: a resource indication, beam resource group, antenna port identifier or antenna port group for an uplink transmission beam of the terminal, which specify a UE uplink transmission beam, beam group, antenna port or antenna port group respectively; an offset between the uplink transmission beam information of the terminal in any two uplink beam management procedures, including specifically: the offset between the resource indications, beam resource groups, antenna port identifiers or antenna port groups of the uplink transmission beams of the terminal in any two uplink beam management procedures; and an uplink reception beam information of the base station in the uplink beam management procedure, including specifically: a resource indication, beam resource group, antenna port identifier or antenna port group for an uplink reception beam of the base station in the uplink beam management procedure.

It is noted that, the terminal may indicate in the uplink beam management procedure the uplink reception beam information of the base station, which including the resource indication, beam resource group, antenna port identifier or antenna port group for the uplink reception beam, via the uplink control channel or uplink traffic channel, so as to specify the resource, beam resource group, antenna port or antenna port group for the uplink reception beam of the base station.

Here, the reporting of the uplink reception beam information may be applied to the scenario where a mismatch between the uplink transmission beam of the terminal and the uplink reception beam from the base station occurs.

Moreover, the reporting of the beam group in the uplink beam management procedure may be applied in the fast beam switch and transmission mode selection.

Step 1002: reporting a beam or transmitting a beam based on the beam management information.

As shown in FIG. 11, the step 1002 may include specifically the following steps.

Step 10021: reporting downlink transmission beam information from the base station and/or downlink reception beam information of the terminal to the base station based on the beam report configuration parameter in the case that the beam management information is the beam report configuration parameter.

Here, the terminal achieves the objective of reporting the beam information based on the beam management information configured by the base station.

Step 10022: transmitting an uplink transmission beam of the terminal to the base station based on the reception/transmission beam information in the case that the beam management information is the reception/transmission beam information.

Here, the terminal transmits the uplink beam based on the beam management information configured by the base station.

The beam management information processing method according to the embodiment of the present disclosure includes: receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information. Thereby the method may reduce the control signaling overhead and improve the efficiency of uplink beam management.

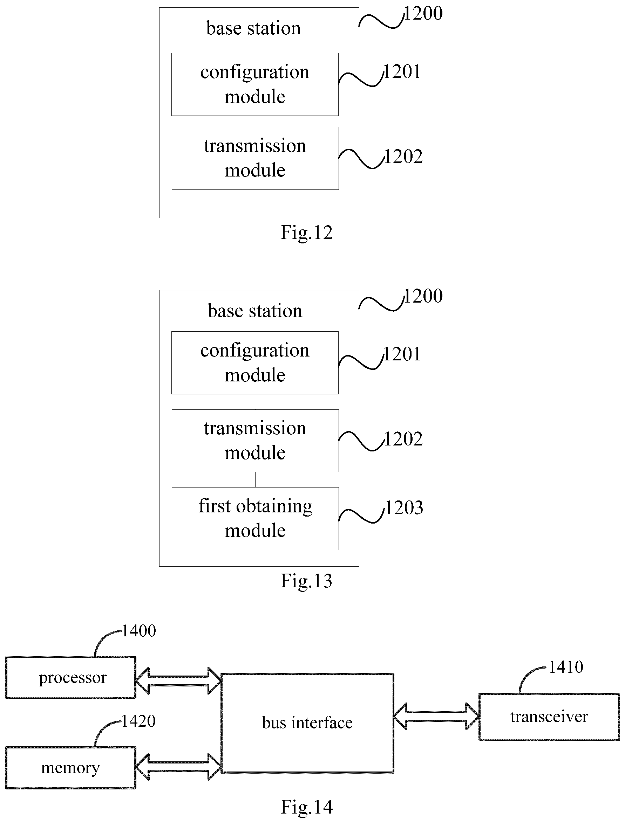

In some optional embodiments, as shown in FIG. 12, the embodiment of the present disclosure also provides a base station 1200, including: a configuration module 1201, configured to configure a beam management information in a beam management procedure, wherein the beam management information includes: a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and a transmission module 1202, configured to transmit the beam management information to the terminal.

In the base station according to the embodiment of the present disclosure, the beam management information is the beam report configuration parameter; as shown in FIG. 13, the base station 1200 further includes: a first obtaining module 1203, configured to obtain downlink transmission beam information from the base station and/or downlink reception beam information of the terminal reported by the terminal based on the beam report configuration parameter.

In the base station according to the embodiment of the present disclosure, the downlink transmission beam information from the base station includes at least one of: a resource indication information of a downlink transmission beam from the base station, a resource group information of the downlink transmission beam from the base station, an antenna port identifier of the downlink transmission beam from the base station or an antenna port group information of the downlink transmission beam from the base station.

The downlink reception beam information of the terminal includes at least one of: a resource indication information of a downlink reception beam of the terminal, a resource group information of the downlink reception beam of the terminal, an antenna port identifier of the downlink reception beam of the terminal or an antenna port group information of the downlink reception beam of the terminal.

In the base station according to the embodiment of the present disclosure, the beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

In the base station according to the embodiment of the present disclosure, the reception/transmission beam information includes at least one of: an uplink transmission beam information of the terminal in the uplink beam management procedure; an offset between the uplink transmission beam information of the terminal in any two uplink beam management procedures; and an uplink reception beam information of the base station in the uplink beam management procedure.

In the base station according to the embodiment of the present disclosure, the transmission module 1202 is configured to transmit the beam management information to the terminal through a RRC signaling, a MAC layer CE and/or a physical layer DCI.

It is noted that the base station corresponds to the aforementioned method embodiments and each implementation of the aforementioned method embodiments is applicable to the embodiments of the base station and may achieve the same technical effect.

The base station according to the embodiment of the present disclosure is configured for configuring the beam management information in the beam management procedure, wherein the beam management information includes: the beam report configuration parameter in the downlink beam management procedure or reception/transmission beam information in the uplink beam management procedure, and the beam report configuration parameter is used to indicate the terminal to report the beam satisfying a preconfigured condition in the downlink beam management procedure; and transmitting the beam management information to the terminal, enabling the terminal to report the beam information in the downlink beam management procedure or transmit an uplink beam in the uplink beam management procedure, thereby reducing the overheads for the base station downlink control information and the terminal reporting information in the beam management of the future mobile communication system, effectively improving the spectrum utilization rate and enhancing the system transmission rate.

In some optional embodiments, as shown in FIG. 14, to facilitate the achievement of aforementioned objectives, some embodiments of the present disclosure further provide a base station, as shown in FIG. 14, the base station including: a processor 1400; a memory 1420 connected to the processor 1400 via a bus interface; and a transceiver 1410 connected to the processor 1400 via the bus interface; wherein the memory 1420 is used for storing programs and data being used by the processor during operation; the transceiver 1410 is used for transmitting data information or pilot signal and receiving the uplink control channel; when the processor 1400 calls and executes the programs and data stored in the memory 1420, the transceiver 1410 transmits a scheduling information containing a value configuration information to the terminal.

The processor 1400 is adapted for reading the programs in the memory 1420 and performing the following process: configuring a beam management information in a beam management procedure, wherein the beam management information includes: a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and transmitting the beam management information to the terminal.

In some optional embodiments, the beam management information is the beam report configuration parameter; and the processor 1400 further configured for: obtaining downlink transmission beam information from the base station and/or downlink reception beam information of the terminal reported by the terminal based on the beam report configuration parameter.

In some optional embodiments, the downlink transmission beam information from the base station includes at least one of: a resource indication information of a downlink transmission beam from the base station, a resource group information of the downlink transmission beam from the base station, an antenna port identifier of the downlink transmission beam from the base station or an antenna port group information of the downlink transmission beam from the base station.

The downlink reception beam information of the terminal includes at least one of: a resource indication information of a downlink reception beam of the terminal, a resource group information of the downlink reception beam of the terminal, an antenna port identifier of the downlink reception beam of the terminal or an antenna port group information of the downlink reception beam of the terminal.

In some optional embodiments, the beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

In some optional embodiments, the reception/transmission beam information includes at least one of: an uplink transmission beam information of the terminal in the uplink beam management procedure; an offset between the uplink transmission beam information of the terminal in any two uplink beam management procedures; and an uplink reception beam information of the base station in the uplink beam management procedure.

In some optional embodiments, the processor 1400 is further configured to transmit the beam management information to the terminal through a RRC signaling, a MAC layer CE and/or a physical layer DCI.

As shown in FIG. 14, the bus architecture may include any quantity of interconnected buses and bridges, and various circuits such as one or more processors represented by the processor 1400 and memories represented by the memory 1420 are connected to each other. The bus architecture may further connect a variety of other circuits such as peripheral devices, voltage regulators and power management circuits to each other, which is known in the art, thus no further description thereof will be given herein. The bus interface provides the interface. The transceiver 1410 may include multiple components, i.e. transmitter and transceiver which are used for communicating with other devices via the transmission medium. The processor 1400 is responsible for supervising the bus architecture and normal operation and the memory 1420 stores the data being used by the processor 1400 during operation.

In this manner, the base station configures the beam management information in the beam management procedure, wherein the beam management information includes: the beam report configuration parameter in the downlink beam management procedure or reception/transmission beam information in the uplink beam management procedure, and the beam report configuration parameter is used to indicate the terminal to report the beam satisfying a preconfigured condition in the downlink beam management procedure; and transmits the beam management information to the terminal, enabling the terminal to report the beam information in the downlink beam management procedure or transmit an uplink beam in the uplink beam management procedure, thereby reducing the overheads for the base station downlink control information and the terminal reporting information in the beam management of the future mobile communication system, effectively improving the spectrum utilization rate and enhancing the system transmission rate.

The base station according to the present disclosure may also be an equipment capable of transmitting and receiving, such as a network node, cell, relay, small cell, micro cell or transceiver node.

Further, it is noted that the respective components or steps in the device and method of the present disclosure may be subdivided and/or recombined and the subdivided and/or recombined components or steps are equivalent embodiments of the present disclosure. Moreover, the steps in the aforementioned processes may be, but not necessarily, performed in temporal sequence in which the steps are depicted herein, that is, some steps may be performed in parallel or independently of each other. It is understood by a person of ordinary skill in the art that all or any steps or components in the method and device of the present disclosure may be implemented in any computing device (including processor, storage medium and the like) or network of computing devices in the form of hardware, firmware, software or combination thereof, which may be implemented by a person of ordinary skill in the art, having the benefit of the teaching presented in the foregoing description of the present disclosure, by using basic programming skill.

Therefore, the objective of the present disclosure may be achieved by running a program or a group of programs on any computing device. The computing device may be a known common device. As a result, the objective of the present disclosure may be achieved by providing a program product which includes program codes implementing said method or device. That is, such program product as well as the storage medium containing such program product fall in the scope of the present disclosure. It is obvious that the storage medium may be any known storage medium or any storage medium to be developed in the future. It is also noted that the respective components or steps in the device and method of the present disclosure may be subdivided and/or recombined and the subdivided and/or recombined components or steps are equivalent embodiments of the present disclosure. Moreover, the steps in the aforementioned processes may be, but not necessarily, performed in temporal sequence in which the steps are depicted herein, that is, some steps may be performed in parallel or independently of each other.

The foregoing are preferred embodiments of the present disclosure. It is noted, those of ordinary skill in the art will recognize that various changes and modifications can be made without departing from the principle of the present disclosure, and these changes and modifications fall within the scope of the present disclosure.

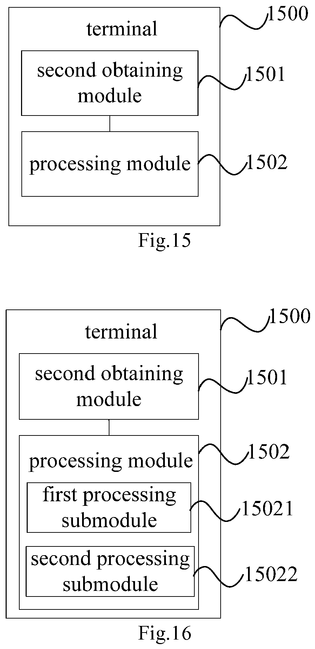

In some optional embodiments, FIG. 15 is a structural diagram of the terminal according to one embodiment of the present disclosure. The terminal 1500 as shown in FIG. 15 is capable of implementing the details of the terminal scheduling method according to the aforementioned method embodiment and attaining the same effect, and includes specifically: a second obtaining module 1501, configured to receive a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and a processing module 1502, configured to report a beam or transmitting a beam based on the beam management information.

The terminal according to the embodiment of the present disclosure is as shown in FIG. 16. The processing module 1502 includes: a first processing submodule 15021, configured to report downlink transmission beam information from the base station and/or downlink reception beam information of the terminal to the base station based on the beam report configuration parameter in the case that the beam management information is the beam report configuration parameter; and a second processing submodule 15022, configured to transmit an uplink transmission beam of the terminal to the base station based on the reception/transmission beam information in the case that the beam management information is the reception/transmission beam information.

In the terminal according to the embodiment of the present disclosure, the reception/transmission beam information includes at least one of: an uplink transmission beam information of the terminal in the uplink beam management procedure; an offset between the uplink transmission beam information of the terminal in any two uplink beam management procedures; and an uplink reception beam information of the base station in the uplink beam management procedure.

In the terminal according to the embodiment of the present disclosure, the beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

It is noted that the terminal corresponds to the aforementioned method embodiments and each implementation of the aforementioned method embodiments is applicable to the embodiments of the terminal and may achieve the same technical effect.

The terminal according to the embodiment of the present disclosure obtains a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reports a beam or transmits a beam based on the beam management information, thereby reducing the control signaling overhead and improving the efficiency of uplink beam management.

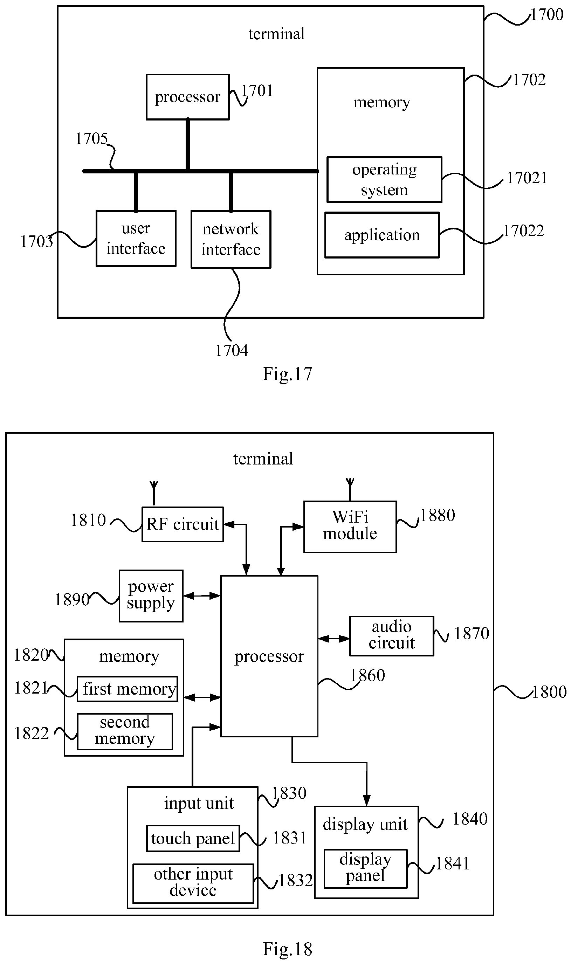

In some optional embodiments, FIG. 17 is another structural block diagram of the terminal according to an embodiment of the present disclosure. The terminal 1700 as shown in FIG. 17 includes: at least one processor 1701, a memory 1702, at least one network interface 1704 and other user interface 1703. The components in the terminal 1700 are coupled to each other via a bus system 1705. It is understood that the bus system 1705 is used for the connection and communication between these components. The bus system 1705 includes power bus, control bus and status signal bus, in addition to the data bus. For clarity, all kinds of buses are all label as the bus system 1705 in FIG. 17.

The user interface 1703 may include a display, keyboard or clicking device (e.g. mouse), trackball, touchpad or touch screen and the like.

It is understood that, the memory 1702 in the embodiments of the present disclosure may be a volatile memory or nonvolatile memory, or alternatively include both a volatile memory and a nonvolatile memory, in which the nonvolatile memory includes Read-Only Memory (ROM), Programmable ROM (PROM), Erasable PROM (EPROM), Electrically EPROM (EEPROM), or flash memory. The volatile memory includes Random Access Memory (RAM), which is used as external cache. By way of illustration only and without limitation, many forms of RAM are available, such as Static RAM (SRAM), Dynamic RAM (DRAM), Synchronous DRAM (SDRAM), Double Data Rate SDRAM (DDRSDRAM), Enhanced SDRAM (ESDRAM), Synchlink DRAM (SLDRAM) and Direct Rambus RAM (DRRAM). The memory 1702 in the system and method in the description herein is directed to include, but not limited to, these and any other suitable kind of memory.

In some implementations, the memory 1702 stores elements, executable modules or data structures, or the subset or extended set thereof as follows: operating system 17021 and application 17022.

The operating system 17021 includes various system programs, such as framework layer program, core library layer program, driver layer program and the like, for performing various basic services and processing hardware-based tasks. The application 17022 includes various applications, such as Media Player, Browser and the like, for performing various application tasks. The program implementing the method according to the embodiments of the present disclosure may be included in the application 17022.

In an embodiment of the present disclosure, by calling programs or instructions stored in the memory 1702, specifically the programs or instructions stored in the application 17022, the processor 1701 is adapted for receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information.

In some optional embodiments, the processor 1701 is adapted for: reporting downlink transmission beam information from the base station and/or downlink reception beam information of the terminal to the base station based on the beam report configuration parameter in the case that the beam management information is the beam report configuration parameter; and transmitting an uplink transmission beam of the terminal to the base station based on the reception/transmission beam information in the case that the beam management information is the reception/transmission beam information.

In some optional embodiments, the reception/transmission beam information includes at least one of: an uplink transmission beam information of the terminal in the uplink beam management procedure; an offset between the uplink transmission beam information of the terminal in any two uplink beam management procedures; and an uplink reception beam information of the base station in the uplink beam management procedure.

In some optional embodiments, the beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; and a beam received signal strength offset, which indicates a maximum signal strength offset value between a received signal strength of the beam reported by the terminal and a maximum beam received signal strength.

In the terminal 1700 according to the embodiment of the present disclosure, the processor 1701 is used for receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information, thereby reducing the control signaling overhead and improving the efficiency of uplink beam management.

The terminal of the present disclosure may be a mobile phone, tablet, Personal Digital Assistant (PDA) or on-board computer or the like.

The terminal 1700 is capable of implementing various processes implemented by the terminals of the aforementioned embodiments. To avoid redundancy, a repeated description thereof is omitted.

The methods disclosed in the aforementioned embodiments are applicable to processor 1701 or performed by the processor 1701. The processor 1701 may be an Integrated Circuit (IC) chip capable of processing signals. In the course of implementation, the steps of aforementioned methods may be implemented in hardware in the form of an integrated logic circuit in the processor 1701 or in software in the form of instructions. The processor 1701 may be a general purpose processor, Digital Signal Processor (DSP), Application Specific Integrated Circuit (ASIC), Field Programmable Gate Array (FPGA) or other programmable logic device, discrete gate or transistor logic device, discrete hardware component, that is capable of implementing or executing the various methods, steps and logic block diagrams disclosed in the embodiments of the present disclosure. The general purpose processor may be a microprocessor, or any conventional processor, etc. The steps of the methods disclosed with reference to the embodiments of the present disclosure may be embodied in hardware in the form of a coding processor, or performed by the hardware in the coding processor and the software modules in combination. The software modules may reside in well-established storage medium in the art, such as a RAM, flash memory, ROM, PROM or EEPROM, register, etc. The storage medium resides in the memory 1702. The processor 1701 reads an information from the memory 1702 and performs the steps of the methods with its hardware.

It is understood that, the embodiments disclosed herein may be implemented by hardware, software, firmware, middle ware, microcode or a combination thereof. For hardware implementation, the processing unit may be implemented in one or more of an ASIC, a DSP, a Digital Signal Processing Device (DSPD), a Programmable Logic Device (PLD), a FPGA, a general-purpose processor, a controller, a microcontroller, a microprocessor or other electronic devices designed to perform the functions described herein, or a combination thereof.

For software implementation, the technique disclosed herein may be implemented by modules (such as processes, functions, etc.) which perform the functions described herein. The software code may be stored in a memory and executed by a processor. The memory may be implemented within a processor or external to a processor.

In some optional embodiments, FIG. 18 illustrates another structural block diagram of the terminal according to the embodiments of the present disclosure. The terminal 1800 as shown in FIG. 18 includes a Radio Frequency (RF) circuit 1810, a memory 1820, an input unit 1830, a display unit 1840, a processor 1860, an audio circuit 1870, a WiFi (Wireless Fidelity) module 1880 and a power supply 1890.

The input unit 1830 may be used for receiving the numerical or character information input by a user, and generating signal inputs related to the user settings and function controls of the terminal 1800. In specific, in the embodiments of the present disclosure, the input unit 1830 may include a touch panel 1831. The touch panel 1831, also known as touch screen, may detect the touches thereon or in the vicinity thereof performed by the user (such as touch operations performed on the touch panel 1831 by the user using a finger, stylus or any other suitable object or accessory) and drive the corresponding connected devices according to preset programs. In some optional embodiments, the touch panel 1831 includes a touch detector and a touch controller. The touch detector detects the position where the user touched and the signal resulting from the touch operation, and conveys the signal to the touch controller; the touch controller receives the touch information from the touch detector, converts the information into coordinates of the touch and conveys the coordinates to the processor 1860, as well as receives and executes the commands from the processor 1860. Further, the touch panel 1831 may be implemented by a variety of modes, such as resistance, capacitance, infrared and surface acoustic wave. In addition to the touch panel 1831, the input unit 1830 may include other input device 1832. The other input device 1832 may include, but is not limited to, one or more of physical keyboard, functional keys (such as volume button, switch button, etc.), track ball, mouse, joystick, etc.

The display unit 1840 may be used for displaying information input by the user or information meant for the user, and various menu interfaces of the terminal 1800. The display unit 1840 may include a display panel 1841. In some optional embodiments, the display panel 1841 may be in the form of LCD or organic light-emitting diode (OLED) or the like.

It is noted that the touch panel 1831 may overlie the display panel 1841, forming a touch display screen. Having detected a touch operation thereon or in the vicinity thereof, the touch display screen conveys the detected touch signal to the processor 1860 to categorize the touch event, and the processor 1860 provides corresponding visual output on the touch display screen based on the category of the touch event.

The touch display screen includes an application interface display region and a common control display region. The arrangement of the application interface display region and the common control display region is not limited, and the arrangement such as up and down arrangement, left and right arrangement, etc. is possible as long as the two display regions may be distinguished. The application interface display region is used for displaying the application interface. Each interface includes interface elements such as the icon of at least one application and/or widgets. The application interface display region may also be an empty interface without any content. The common control display region is used for displaying the frequently used controls, e.g. a set button, an interface number, a scroll bar, and an application icon such as a phonebook icon.

The processor 1860 is the control center of the terminal 1800, which connects to each part of the mobile phone via various interfaces and lines, executes various functions of the terminal 1800 and processes data by running or executing the software programs and/or modules stored in the first memory 1821 and calling the data stored in the second memory 1822, thus supervising the terminal 1800 as a whole. In some optional embodiments, the processor 1860 includes one or more processing units.

In an embodiment of the present disclosure, through calling the software programs and/or modules stored in the first memory 1821 and/or data stored in the second memory 1822, the processor 1860 is used for: receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information.

In some optional embodiments, the processor 1860 is also used for: reporting downlink transmission beam information from the base station and/or downlink reception beam information of the terminal to the base station based on the beam report configuration parameter in the case that the beam management information is the beam report configuration parameter; and transmitting an uplink transmission beam of the terminal to the base station based on the reception/transmission beam information in the case that the beam management information is the reception/transmission beam information.

In some optional embodiments, the reception/transmission beam information includes at least one of: an uplink transmission beam information of the terminal in the uplink beam management procedure; an offset between the uplink transmission beam information of the terminal in any two uplink beam management procedures; and an uplink reception beam information of the base station in the uplink beam management procedure.

In some optional embodiments, the beam report configuration parameter includes at least one of: a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure; a beam received power threshold, which indicates a minimum received power value of the beam reported by the terminal; a beam received signal strength threshold, which indicates a minimum received signal strength of the beam reported by the terminal; a beam received power threshold offset, which indicates an offset value between the beam received power thresholds of the beams reported by the terminal in any two downlink beam management procedures; a beam received signal strength threshold offset, which indicates an offset value between the beam received signal strength thresholds of the beams reported by the terminal in any two downlink beam management procedures; a beam received power offset, which indicates a maximum power offset value between a received power of the beam and a maximum received power of the beam report by the terminal; a beam received signal strength offset, which indicates a maximum signal strength offset value between a received signal strength of the beam reported by the terminal and a maximum beam received signal strength.

The terminal of the present disclosure may be a mobile phone, a tablet, a PDA or an on-board computer or the like.

The terminal 1800 is capable of implementing various processes implemented by the terminals of the aforementioned embodiments. To avoid redundancy, a repeated description thereof is omitted.

In the terminal 1800 according to the embodiment of the present disclosure, the processor 1860 is used for: receiving a beam management information transmitted by a base station, wherein the beam management information includes: a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and reporting a beam or transmitting a beam based on the beam management information, thereby reducing the control signaling overhead and improving the efficiency of uplink beam management.

A person skilled in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed device and method may be implemented in other manners. For example, the described device embodiment is merely exemplary. For example, the unit division is merely logical function division and may be other division in actual implementation. For example, a plurality of units or components may be combined or integrated into another system, or some features may be neglected or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, that is, may be located in one position, or may be distributed on a plurality of network units. Apart or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

If the functions are implemented in a form of a software functional unit and sold or used as an independent product, the functions may be stored in a computer-readable storage medium. Based on such an understanding, the technical solutions of the present disclosure essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the disclosure. The foregoing storage medium includes any medium that can store program code, such as a Universal Serial Bus (USB) flash drive, a removable hard disk, a ROM, a RAM, a magnetic disk, or an optical disc.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. Wherein the storage medium may be a magnetic disk, an optic disc, a ROM or a RAM, etc.

The above descriptions merely describe preferred embodiments of the present disclosure, but the scope of the present disclosure is not limited thereto. Any modifications, equivalent replacements or improvements made without departing from the spirit and principle of the disclosure shall fall within the scope of the present disclosure.

## Claims

1. A beam management information configuration method, applied to a base station and comprising:
configuring a beam management information in a beam management procedure, wherein the beam management information comprises a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and
transmitting the beam management information to the terminal.

2. The beam management information configuration method according to claim 1, wherein the beam management information is the beam report configuration parameter; and subsequent to transmit the beam management information to the terminal, the method further comprises:
obtaining the downlink transmission beam information from the base station and/or the downlink reception beam information of the terminal reported by the terminal based on the beam report configuration parameter.

3. The beam management information configuration method according to claim 2, wherein the downlink transmission beam information from the base station comprises at least one of:
a resource indication information of a downlink transmission beam from the base station, a resource group information of the downlink transmission beam from the base station, an antenna port identifier of the downlink transmission beam from the base station, or an antenna port group information of the downlink transmission beam from the base station; and
the downlink reception beam information of the terminal comprises at least one of:
a resource indication information of a downlink reception beam of the terminal, a resource group information of the downlink reception beam of the terminal, an antenna port identifier of the downlink reception beam of the terminal, or an antenna port group information of the downlink reception beam of the terminal.

4. The beam management information configuration method according to claim 1, wherein the beam report configuration parameter comprises at least one of:
a number of report beams or a number of report antenna ports or a number of report beam resources, wherein the number of report beams is used to indicate a maximum number of beams reported by the terminal in a downlink beam management procedure, the number of report antenna ports is used to indicate a maximum number of antenna ports reported by the terminal in a downlink beam management procedure, and the number of the report beam resources is used to indicate a maximum number of resources reported by the terminal in a downlink beam management procedure;
a beam received power threshold, which indicates a minimum received power value of the beam reported by the terminal;
a beam received signal strength threshold, which indicates a minimum received signal strength of the beam reported by the terminal;
a beam received power threshold offset, which indicates an offset value between the beam received power thresholds of the beams reported by the terminal in any two downlink beam management procedures;
a beam received signal strength threshold offset, which indicates an offset value between the beam received signal strength thresholds of the beams reported by the terminal in any two downlink beam management procedures;
a beam received power offset, which indicates a maximum power offset value between a received power of the beam and a maximum received power of the beam report by the terminal; and
a beam received signal strength offset, which indicates a maximum signal strength offset value between a received signal strength of the beam and a maximum beam received signal strength reported by the terminal.

5. The beam management information configuration method according to claim 1, wherein the reception/transmission beam information comprises at least one of:
an uplink transmission beam information of the terminal in the uplink beam management procedure;
an offset between the uplink transmission beam information of the terminal in any two uplink beam management procedures; and
an uplink reception beam information of the base station in the uplink beam management procedure.

6. The beam management information configuration method according to claim 1, wherein transmitting the beam management information to the terminal comprises:
transmitting the beam management information to the terminal through a Radio Resource Control (RRC) signaling, a Medium Access Control (MAC) layer Control Element (CE) and/or a physical layer Downlink Control Indicator (DCI).

7. A beam management information processing method, applied to a terminal and comprising:
receiving a beam management information transmitted by a base station, wherein the beam management information comprises a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and
reporting a beam or transmitting a beam based on the beam management information.

8. The beam management information processing method according to claim 7, wherein reporting the beam or transmitting the beam based on the beam management information comprises:
reporting the downlink transmission beam information from the base station and/or the downlink reception beam information of the terminal to the base station based on the beam report configuration parameter in the case that the beam management information is the beam report configuration parameter; and
transmitting an uplink transmission beam of the terminal to the base station based on the reception/transmission beam information in the case that the beam management information is the reception/transmission beam information.

9. The beam management information processing method according to claim 7, wherein the reception/transmission beam information comprises at least one of:
an uplink transmission beam information of the terminal in the uplink beam management procedure;
an offset between the uplink transmission beam information of the terminal in any two uplink beam management procedures; and
an uplink reception beam information of the base station in the uplink beam management procedure.

10. The beam management information processing method according to claim 7, wherein the beam report configuration parameter comprises at least one of:
a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure;
a beam received power threshold, which indicates a minimum received power value of the beam reported by the terminal;
a beam received signal strength threshold, which indicates a minimum received signal strength of the beam reported by the terminal;
a beam received power threshold offset, which indicates an offset value between the beam received power thresholds of the beams reported by the terminal in any two downlink beam management procedures;
a beam received signal strength threshold offset, which indicates an offset value between the beam received signal strength thresholds of the beams reported by the terminal in any two downlink beam management procedures;
a beam received power offset, which indicates a maximum power offset value between a received power of the beam and a maximum received power of the beam report by the terminal; and
a beam received signal strength offset, which indicates a maximum signal strength offset value between a received signal strength of the beam reported by the terminal and a maximum beam received signal strength.

11. Abase station, comprising:
a configuration module, configured to configure a beam management information in a beam management procedure, wherein the beam management information comprises a beam report configuration parameter in a downlink beam management procedure or a reception/transmission beam information in an uplink beam management procedure, and the beam report configuration parameter is used to indicate a terminal to report a beam satisfying a preconfigured condition in the downlink beam management procedure; and
a transmission module, configured to transmit the beam management information to the terminal.

12. The base station according to claim 11, wherein the beam management information is the beam report configuration parameter; and
the base station further comprising:
a first obtaining module, configured to obtain downlink transmission beam information from the base station and/or downlink reception beam information of the terminal reported by the terminal based on the beam report configuration parameter.

13. The base station according to claim 12, wherein the downlink transmission beam information from the base station comprises at least one of:
a resource indication information of a downlink transmission beam from the base station, a resource group information of the downlink transmission beam from the base station, an antenna port identifier of the downlink transmission beam from the base station, or an antenna port group information of the downlink transmission beam from the base station; and
the downlink reception beam information of the terminal comprises at least one of:
a resource indication information of a downlink reception beam of the terminal, a resource group information of the downlink reception beam of the terminal, an antenna port identifier of the downlink reception beam of the terminal, or an antenna port group information of the downlink reception beam of the terminal.

14. The base station according to claim 11, wherein the beam report configuration parameter comprises at least one of:
a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in a downlink beam management procedure, and the number of report beam resources is used to indicate a maximum number of resources reported by the terminal in a downlink beam management procedure;
a beam received power threshold, which indicates a minimum received power value of the beam reported by the terminal;
a beam received signal strength threshold, which indicates a minimum received signal strength of the beam reported by the terminal;
a beam received power threshold offset, which indicates an offset value between the beam received power thresholds of the beams reported by the terminal in any two downlink beam management procedures;
a beam received signal strength threshold offset, which indicates an offset value between the beam received signal strength thresholds of the beams reported by the terminal in any two downlink beam management procedures;
a beam received power offset, which indicates a maximum power offset value between a received power of the beam and a maximum received power of the beam report by the terminal; and
a beam received signal strength offset, which indicates a maximum signal strength offset value between a received signal strength of the beam reported by the terminal and a maximum beam received signal strength.

15. The base station according to claim 11, wherein the reception/transmission beam information comprises at least one of:
an uplink transmission beam information of the terminal in the uplink beam management procedure;
an offset between the uplink transmission beam information of the terminal in any two uplink beam management procedures; and
an uplink reception beam information of the base station in the uplink beam management procedure.

16. The base station according to claim 11, wherein the transmission module is configured to transmit the beam management information to the terminal through a RRC signaling, a MAC layer CE and/or a physical layer DCI.

17. A terminal, comprising:
a second obtaining module, configured to receive a beam management information transmitted by a base station, wherein the beam management information comprises a beam report configuration parameter in a downlink beam management procedure or a reception/transmission beam information in an uplink beam management procedure, and the beam report configuration parameter is used to indicate the terminal to report a beam satisfying a preconfigured condition in the downlink beam management procedure; and
a processing module, configured to report a beam or transmitting a beam based on the beam management information.

18. The terminal according to claim 17, wherein the processing module comprises:
a first processing submodule, configured to report the downlink transmission beam information from the base station and/or the downlink reception beam information of the terminal to the base station based on the beam report configuration parameter in the case that the beam management information is the beam report configuration parameter; and
a second processing submodule, configured to transmit an uplink transmission beam of the terminal to the base station based on the reception/transmission beam information in the case that the beam management information is the reception/transmission beam information.

19. The terminal according to claim 17, wherein the reception/transmission beam information comprises at least one of:
an uplink transmission beam information of the terminal in the uplink beam management procedure;
an offset between the uplink transmission beam information of the terminal in any two uplink beam management procedures; and
an uplink reception beam information of the base station in the uplink beam management procedure.

20. The terminal according to claim 17, wherein the beam report configuration parameter comprises at least one of:
a number of report beams or a number of report antenna ports or a number of report beam resources, wherein the number of report beams is used to indicate a maximum number of beams reported by the terminal in the downlink beam management procedure, the number of report antenna ports is used to indicate a maximum number of antenna ports reported by the terminal in the downlink beam management procedure, and the number of report beam resources is used to indicate a maximum number of resources reported by the terminal in the downlink beam management procedure;
a beam received power threshold, which indicates a minimum received power value of the beam reported by the terminal;
a beam received signal strength threshold, which indicates a minimum received signal strength of the beam reported by the terminal;
a beam received power threshold offset, which indicates an offset value between the beam received power thresholds of the beams reported by the terminal in any two downlink beam management procedures;
a beam received signal strength threshold offset, which indicates an offset value between the beam received signal strength thresholds of the beams reported by the terminal in any two downlink beam management procedures;
a beam received power offset, which indicates a maximum power offset value between a received power of the beam and a maximum received power of the beam report by the terminal; and
a beam received signal strength offset, which indicates a maximum signal strength offset value between a received signal strength of the beam reported by the terminal and a maximum beam received signal strength.

21. Abase station, comprising a memory, a processor, and a computer program stored in the memory and configured to be executed by the processor, wherein the processor is configured to execute the computer program, to implement steps of the beam management information configuration method according to any one of claims 1 to 6.

22. A terminal, comprising a memory, a processor, and a computer program stored in the memory and configured to be executed by the processor, wherein the processor is configured to execute the computer program, to implement steps of the downlink control channel indication method according to any one of claims 7 to 10.

23. A computer-readable storage medium storing therein a computer program, wherein the computer program is configured to be executed by a processor, to implement steps of the beam management information configuration method according to any one of claims 1 to 6.

24. A computer-readable storage medium storing therein a computer program, wherein the computer program is configured to be executed by a processor, to implement steps of the downlink control channel indication method according to any one of claims 7 to 10.
